# EUROPEAN PATENT SPECIFICATION

(11) **EP 4 078 633 B1**
(45) Date of publication and mention of the grant of the patent: **22.04.2026**
(21) Application number: 20903038.6
(22) Date of filing: 07.12.2020
(51) Int. Cl.: H01G 11/52, H01M 50/403, H01M 50/429, H01G 11/84, H01G 9/02

(54) **A NOVEL SEPARATOR FOR SUPERCAPACITORS**
NEUARTIGER SEPARATOR FÜR SUPERKONDENSATOREN
NOUVEAU SÉPARATEUR POUR SUPERCONDENSATEURS

(30) Priority: 17.12.2019 TR 201920426
(43) Date of publication of application: 26.10.2022
(73) Proprietor: Ankara Üniversitesi Rektörlügü, 06560 Ankara (TR)
(72) Inventor: AKTA , Zeki, Ankara (TR); GÖKÇE, Yavuz, Ankara (TR); YA MUR, Emine, Ankara (TR)
(74) Representative: Kaya, Erdem
(86) International application number: PCT/TR2020/051244
(87) International publication number: WO 2021/126119

(56) References cited:
- CN-A- 106 504 911
- CN-A- 109 786 132
- NL-A- 7 501 098
- US-A1- 2014 029 162
- US-B2- 10 153 473

## Description

### Technical Field of the Invention

The present invention relates to the use of the peel of oleaster fruit as a natural, renewable, environment-friendly, cost-efficient, and easy-to-prepare material instead of current materials of supercapacitor separators that are one of the important components of supercapacitors affecting the performance.

### State of the Art

Supercapacitors, which are among the tools used for energy conversion and storage, have advantages such as extended cycle life, higher power density, and charge/discharge rate over batteries and fuel cells. Among other energy storage systems, supercapacitors are mainly systems designed for storing and transferring energy rapidly. In general, a supercapacitor comprises a current collector, an electrode material, an electrolyte material, and a separator. In the respective literature, the number of studies conducted on separators, which have an important function in supercapacitors and affect the performance thereof, is quite scarce. Separators used in supercapacitors separate the anode and cathode both physically and electrically and prevent any potential short circuits in the cell. Separators are usually made of layers consisting of resins, pellets, papers, fabrics, or polymer materials of a porous structure. Separators not only must be electrically non-conductive but also should allow the ion flow between the anode and cathode. Ionic conductivity realizes throughout the electrolyte phase present in the solid pores of the separator. The separator is positioned between the anode and cathode and enables the charge and discharge of the cell. Therefore, separators used for this purpose should feature; high electrolyte absorption, low ionic resistance, and a porous and stable structure. Moreover, they also should be flexible. Separators should be able to compensate for the electrochemical expansion and contraction of anode and cathode during charge and discharge cycles. Furthermore, separators should also be oxidation- and reduction-resistant. Separators should not be affected by reaction products forming inside the cell, nor should they be electrolyte-soluble, and must be corrosion-resistant with other components of the cell. The physical and chemical properties of separators should be compatible with components and equipment composing the electrochemical cell. Furthermore, separators used in the electrochemical cell should show thermal stability behavior during storing and generating energy. In addition, using thin separators in supercapacitors affects the performance of the cell, as well as energy generation. It is observed that studies available in the respective literature generally utilize polymer-based, fabric, paper, etc. separators, and such separators are synthesized by using various chemicals and take a long time to prepare. Therefore, such separators bring along high costs. The present invention, in order to overcome at least some of the aforementioned disadvantages, proposes using the peel of oleaster fruit as a natural separator in supercapacitors, as oleaster fruit grows quite easily in nature and the peel thereof may be prepared as a separator without any chemical processes and merely by performing a surface cleaning process by preliminary scouring and/or using ultrasonic waves.

The preliminary search conducted in the respective literature showed no studies on the use of peel of oleaster fruit as a separator in supercapacitors. Various fruit components and egg membrane are known to be used as a natural separator in supercapacitors and yielded good results. CN106504911A discloses a separator that is at least one of a food product, an aquatic product, a soy product, a vegetable and an egg product.

Disadvantages of commonly used separators are generally that they are prepared by using chemicals and that they create resistance in the use of supercapacitors. The peel of oleaster fruit is a natural substance and naturally available. The preparation stage is fairly simple. After the peel is readily separated from the fruit compared to other natural substances, peels are washed a few times with distilled water and used directly as a separator in the supercapacitor after being dried.

The present invention discloses the use of the peel of oleaster fruit, which is obtained from a renewable source, as a cost-efficient, easy-to-prepare, economical, and environment-friendly natural separator in supercapacitors.

### Technical Problems the Invention Seeks to Solve

Separators, being one of the main elements of energy storage devices, may be manufactured from various materials, either natural or synthetic. In general; materials used include polymer-based membranes, fabrics (with or without wool), papers (conductive papers, filter papers, etc.). Polymer-based materials among the aforementioned group are difficult to prepare and bring high costs along. Though paper and fabric separators are more commonly used, all three types of separators suffer from inducing various adverse environmental impacts such as generating high carbon footprint, water footprint, as well as chemical waste as per the production process of raw materials. Therefore, natural separators may be considered as an alternative given their short manufacturing processes, low costs, and environmental advantages.

Since oleaster (*Elaeagnus Angustifolia L.*) trees are drought-tolerant, they can easily grow by themselves in any sort of soil structure. Oleaster fruit consists of seed, the mealy portion (edible), and peel. The peel of oleaster fruit is sturdy, and since it comprises stomata and intracellular cells on the surface thereof, the peel protects the edible mealy portion of the fruit from rainy and dust-laden air. This protective characteristic functions bidirectionally (inner and outer surface of the peel), the peel behaves as a natural membrane. These properties render the peel of oleaster fruit usable as an alternative in electrochemical double-layer capacitors. Moreover, compared to similar structures (skin, membrane, etc.) behaving like a membrane, the peel of the oleaster fruit can be easily separated from the fruit and rendered ready to use.

The present invention proposes using the peel of the oleaster fruit as a separator that may be obtained from an edible material, prepared easily and in a short period of time, that is highly efficient in terms of cost, environment-friendly, and may be used bilaterally.

### Description of the Invention

The present invention relates to a method for manufacturing supercapacitor separators using fruit peel according to claim 1 and the use of said separator with organic electrolytes according to claim 3.

According to an aspect of the present invention, an edible substance may be used as a separator. According to another aspect of the present invention, the preparation stage of the peel of oleaster fruit is limited to only washing and/or ultrasonic wave interaction prior to utilizing the peel of the oleaster fruit as a separator. Hence, long preparation processes are rendered unnecessary. According to another aspect of the present invention, since the material used as a separator is a natural substance, no chemical materials are utilized, thereby reducing incurring costs. The present invention creates no adverse impacts on the environment as it does not have carbon, water, and chemical footprints. According to another aspect of the present invention, the peel of oleaster fruit may be used as a bilateral separator material.

### Detailed Description of the Invention

Batteries, electrochemical supercapacitors, and fuel cells are among the most important energy conversion and storage devices. Supercapacitors among these energy conversion systems, have advantages such as extended cycle life, higher power density, and charge/discharge rate over batteries and fuel cells. Among other energy storage systems, supercapacitors are mainly systems designed for storing and transferring energy rapidly. When compared to conventional capacitors, supercapacitors are capable of storing hundreds of times more energy and transferring the stored energy approximately ten times faster than electrochemical batteries. These properties render supercapacitors particularly indispensable for the novel technologies of our age. Supercapacitors are generally used as energy generation and storage systems which are of capital importance particularly for electric vehicles and portable electronic devices. In general, a supercapacitor comprises a current collector, an electrode material, an electrolyte material, and a separator. In the respective literature, the number of studies conducted on separators, which have an important function in supercapacitors and affect the performance thereof, is quite scarce. Separators used in supercapacitors separate the anode and cathode both physically and electrically and prevent any potential short circuits in the cell. Typically, resins, pellets, papers, fabrics, or polymer materials of porous structure are used as separators. Separators not only must be electrically non-conductive but also should allow the ion flow between the anode and cathode. Ionic conductivity realizes throughout the electrolyte phase present in the solid pores of the separators. The separator is positioned between the anode and cathode and enables the charge and discharge of the cell. Therefore, separators used for this purpose are expected to feature;
- high electrolyte absorption,
- low ionic resistance,
- low oxidation and reduction resistance,
- dimensionally porous structure,
- thin, flexible, and stable structure,
- being able to compensate for the electrochemical expansion and contraction of anode and cathode during the charge and discharge cycles,
- high corrosion resistance,
- compatibility with components and equipment composing the supercapacitor cell,
- thermal stability.

It is observed that studies in the relevant literature generally prefer to use polymer-based, and paper separators. As these separators are synthesized by using various chemicals, they impose several adverse impacts on the environment and their preparation processes take long periods of time. During recent years, researchers, taking inspiration from nature, have begun to investigate the use of eggshells, wood, transparent bone, and orange peel as a separator. Findings obtained as a result thereof have shown that such materials can indeed be used as a separator. As such, the present invention also relates to the use of a novel material as a separator in supercapacitors. The substance selected as a separator is the peel of oleaster fruit. The peel of oleaster fruit is a material that does not require extensive and long preparation processes compared to other natural separators in the relevant literature. It may grow by itself in nature. As the stomata and intracellular gaps create pores on the peel, it is possible to use the peel as a separator.

The object of the present invention is to use the peel of oleaster fruit, which is obtained from a renewable source, as a cost-efficient, easy-to-prepare, economical, and environment-friendly natural separator in supercapacitors.

Another object of the present invention is to develop a method for using oleaster peel as a separator.

### Use of Oleaster Peel as a Separator

Peels of fruits picked from oleaster trees are removed in a vertical direction by hand. Thus, the peel is separated from the edible mealy portion and the seed of the fruit. The surface of the fruit is washed with distilled water a few times in order to remove the mealy portion on the fruit peel, and subsequently, peels are rendered ready to use in supercapacitors. Peels are subjected to interaction with ultrasonic waves (ultrasonication) for a sufficient period of time (1 to 5 minutes depending on the amount mealy portion remaining on the surface) within a beaker containing distilled water in order to remove the mealy portion that may remain on the fruit peel after the washing process. At the end of this process, clean peels are left dry at room temperature and rendered ready to use.

## Claims

1. A method for manufacturing supercapacitor separators using fruit peel, comprising the following process steps,
- Separating the peel of oleaster fruit picked from oleaster trees without using any cutting tools,
- Washing the peels with distilled water for at least 1 minute in order to remove impurities on the peels,
- Drying the peels at room temperature after the washing process,
- Subjecting the peels to interaction with ultrasonic waves (ultrasonication) within a beaker containing distilled water for a maximum duration of 5 minutes depending on the amount of impurities remaining on the peel after washing with distilled water,
- Drying the peels at room temperature following ultrasonic wave interaction.

2. A method according to Claim 1, wherein the only chemical used therein is distilled water.

3. Use of the separator produced by the method of claims 1 or 2 with organic electrolytes.

## Patentansprüche

1. Verfahren zur Herstellung von Superkondensator-Separatoren unter Verwendung von Fruchtschalen, umfassend die folgenden Verfahrensschritte:
- Trennen der Schalen von Oleaster-Früchten, die von Oleaster-Bäumen gepflückt wurden, ohne Schneidwerkzeuge zu verwenden,
- Waschen der Schalen mit destilliertem Wasser für mindestens 1 Minute, um Verunreinigungen auf den Schalen zu entfernen,
- Trocknen der Schalen bei Raumtemperatur nach dem Waschvorgang,
- Beaufschlagen der Schalen mit Ultraschallwellen (Ultraschallbehandlung) in einem Becherglas mit destilliertem Wasser für eine maximale Dauer von 5 Minuten, abhängig von der Menge der nach dem Waschen mit destilliertem Wasser auf der Schale verbleibenden Verunreinigungen,
- Trocknen der Schalen bei Raumtemperatur nach Einwirkung von Ultraschallwellen.

2. Verfahren nach Anspruch 1, wobei die einzige dabei verwendete Chemikalie destilliertes Wasser ist.

3. Verwendung des nach dem Verfahren der Ansprüche 1 oder 2 hergestellten Separators mit organischen Elektrolyten.

## Revendications

1. Une méthode de fabrication de séparateurs de supercondensateurs en utilisant des peaux de fruits, comprenant les étapes suivantes du procédé :
- Séparer la peau des fruits d'oléastre cueillis sur des oléastres sans utiliser d'outils coupants,
- Laver les peaux avec de l'eau distillée pendant au moins 1 minute afin d'éliminer les impuretés présentes sur les peaux,
- Sécher les peaux à température ambiante après le procédé de lavage,
- Soumettre les peaux à une interaction avec des ondes ultrasonores (ultrasonication) dans un bécher contenant de l'eau distillée pendant une durée maximale de 5 minutes, en fonction de la quantité d'impuretés restant sur la peau après le lavage à l'eau distillée,
- Sécher les peaux à température ambiante après l'interaction avec les ondes ultrasonores.

2. Une méthode selon la revendication 1, dans laquelle le seul produit chimique utilisé est de l'eau distillée.

3. Utilisation du séparateur produit selon la méthode des revendications 1 ou 2 avec des électrolytes organiques.
